# FASCICULE DE BREVET EUROPEEN

(11) **EP 0 806 401 B1**
(45) Date de publication et mention de la délivrance du brevet: **24.07.2002**
(21) Numéro de dépôt: 97400959.9
(22) Date de dépôt: 29.04.1997
(51) Int. Cl.: C03C 17/36

(54) **Utilisation d'une barrière en nitrure pour éviter la diffusion d'argent dans du verre**
Anwendung einer Nitridsperrschicht zur Vermeidung von Silberdiffusion in Glas
Use of a nitride barrier for avoiding silver migration into glass

(30) Priorité: 07.05.1996 FR 9605687
(43) Date de publication de la demande: 12.11.1997
(73) Titulaire: THOMSON CSF, 75008 Paris (FR)
(72) Inventeur: Baret, Guy, Thomson-CSF S.C.P.I., 94117 Arcueil cedex (FR)
(74) Mandataire: Simonnet, Christine

(56) Documents cités:
- US-A- 4 450 201
- US-A- 4 780 372
- US-A- 5 139 856
- PATENT ABSTRACTS OF JAPAN vol. 012, no. 338 (C-527), 12 septembre 1988 & JP 63 100043 A (NIPPON SHEET GLASS CO LTD), 2 mai 1988,

## Description

La présente invention se rapporte au domaine de la métallisation de substrats de verre notamment pour la fabrication d'écrans plats de visualisation. Cette métallisation sert à former des réseaux d'électrodes. Ces électrodes sont opaques, elles sont généralement réalisées en argent.

Jusqu'à présent, la métallisation des substrats de verre destinés aux réseaux d'électrodes denses, de pas inférieur à 500 micromètres était réalisée sous vide par pulvérisation cathodique ou vaporisation. La couche déposée est relativement épaisse, de un à quelques micromètres et la durée du dépôt en chambre à vide est relativement longue. Le coût de tels substrats métallisés est élevé et ce coût augmente très rapidement avec la surface des substrats.

De nouvelles méthodes de métallisation, moins onéreuses ont été explorées ; il s'agit notamment de photogravure de couches de pâte d'argent photosensible ou non. Cette méthode n'est pas compatible avec une utilisation sur la face avant d'un panneau de visualisation car il se produit une coloration jaune dans le substrat de verre.

En effet, une zone située sous l'électrode, et s'étendant de part et d'autre de l'électrode d'environ 30 à 50 micromètres est teintée en jaune à cause de la diffusion de l'argent dans le verre.

La lumière que reçoit un observateur provient d'une part de la lumière produite par les décharges électriques à l'intérieur du panneau qui est transmise par le substrat de verre et d'autre part, de la lumière réfléchie par les électrodes. C'est au niveau des zones de diffusion que sort la plus grande partie de la lumière perçue par l'observateur.

Cette coloration, à la manière d'un filtre jaune, dégrade fortement la colorimétrie du panneau de visualisation en couleurs. Il n'est donc pas souhaitable que la lumière perçue soit filtrée en jaune.

La présente invention vise à supprimer cette coloration jaune en évitant la diffusion de l'argent dans le verre sans pour autant dégrader l'adhérence et la stabilité chimique de l'argenture.

Pour cela la présente invention concerne l'utilisation d'une barrière à base de nitrure pour éviter la diffusion d'argent dans un substrat de verre.

Le nitrure peut être par exemple un nitrure de titane, un nitrure de bore, un nitrure de silicium. Le nitrure de titane donne des résultats très satisfaisants au point de vue transparence.

La barrière à base de nitrure peut être déposée par pulvérisation cathodique, évaporation sous vide ou PECVD (pour la dénomination anglaise de Plasma Enhanced Chemical Vapor Deposition) par exemple.

Une épaisseur de barrière supérieure à environ 50 nanomètres est efficace pour stopper la diffusion de l'argent.

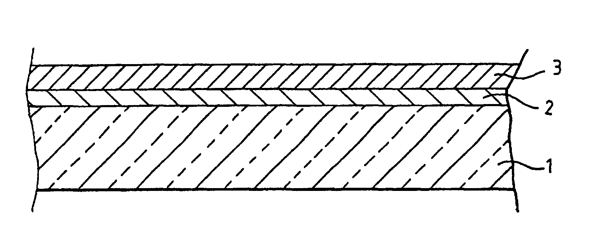

La présente invention sera mieux comprise à l'aide de la description qui suit illustrée par la figure unique qui représente en coupe transversale le substrat de verre, la barrière et le dépôt à base d'argent.

La méthode connue de dépôt par photogravure d'électrodes d'argent engendrant une coloration jaune comporte les étapes suivantes.

On dépose sur un substrat de verre par sérigraphie puis séchage une pâte à base d'argent photosensible ou non. Lorsque la pâte à base d'argent n'est pas photosensible on la recouvre d'une couche d'une résine photosensible.

On expose ensuite le dépôt à base d'argent, éventuellement recouvert de résine, à de la lumière ultraviolette à travers un masque puis l'on développe l'ensemble. On procède ensuite à une cuisson du substrat argenté à une température comprise entre environ 540° C et 600° C. Cette opération de cuisson entraîne la diffusion de l'argent dans le verre du substrat et l'apparition d'une coloration jaune très gênante si le substrat de verre est la face avant d'un panneau de visualisation. Cette coloration apparaît même pour de faibles concentrations en argent.

Un substrat en verre coloré en jaune par de l'argent transmet 54 % de la lumière rouge émise, 59 % pour cents de la lumière verte émise et 12 % de la lumière bleue émise.

La présente invention consiste à utiliser une barrière 2 à base de nitrure interposée entre le substrat 1 de verre et le dépôt 3 à base d'argent pour éviter la coloration en jaune du verre provoquée par la diffusion de l'argent dans le verre. La figure unique montre en coupe l'agencement des couches sur le substrat de verre 1.

Cette barrière 2 à base de nitrure est efficace même après une cuisson du dépôt 3 à base d'argent à des températures supérieures à 580°C.

La barrière 2 à base de nitrure peut être déposée sur le substrat 1 de verre, par exemple par pulvérisation cathodique ou évaporation sous vide. Un dépôt par un procédé chimique, stimulé par un plasma, et connu sous le vocable anglais de PECVD (pour Plasma Enhanced Chemical Vapor Deposition) est également possible. La technique PECVD permet l'obtention d'un dépôt homogène.

Le nitrure de titane donne de très bons résultats. En effet, en présence d'argent, le nitrure de titane qui est de teinte grise devient beaucoup plus clair, ce qui permet d'obtenir dans l'application en tant que face avant d'un panneau de visualisation, des zones bien transparentes.

Tout autre métal est bien sûr utilisable en particulier le silicium ou le bore. Un mélange de nitrures peut aussi être utilisé.

Une barrière 2 d'épaisseur supérieure à environ 50 nanomètres est suffisante pour éviter la coloration jaune.

Le substrat 1 de verre pourra, par exemple, être de type sodo-calcique (connu dans la littérature sous la dénomination anglo-saxonne de float glass). Ce substrat 1 pourra être éventuellement recuit, poli ou façonné. D'autres types de verres plats peuvent bien sûr être utilisé, par exemple de type borosilicate ou aluminosilicate.

Le dépôt 3 à base d'argent peut être réalisé de manière classique par sérigraphie et photogravure puis être soumis à une cuisson à une température supérieure à 400° comme on l'a décrit précédemment.

L'épaisseur du dépôt 3 à base d'argent peut être d'environ 7 micromètres. Habituellement l'épaisseur du dépôt à base d'argent est comprise entre 3 et 12 micromètres environ.

## Revendications

1. Utilisation sur un substrat (1) de verre revêtu d'un dépôt (3) à base d'argent et cuit, d'une barrière (2) à base de nitrure intercalée entre le substrat de verre et le dépôt à base d'argent pour éviter une coloration jaune du verre qui apparaît après la cuisson du substrat argenté sans barrière et qui est provoquée par la diffusion de l'argent dans le verre.

2. Utilisation selon la revendication 1, **caractérisée en ce que** le nitrure est choisi parmi le nitrure de titane, de silicium, de bore ou leur mélange.

3. Utilisation selon l'une des revendications 1 ou 2, **caractérisée en ce que** la barrière (2) est déposée par pulvérisation cathodique, évaporation sous vide ou PECVD.

4. Utilisation selon l'une des revendications 1 à 3, **caractérisée en ce que** la barrière (2) a une épaisseur supérieure ou égale à environ 50 nanomètres.

5. Utilisation selon l'une des revendications 1 à 4, **caractérisée en ce que** le dépôt (3) à base d'argent est réalisé par photogravure.

6. Utilisation selon l'une des revendications 1 à 5, **caractérisée en ce que** l'argent a subi une cuisson à une température supérieure à 400° C après le dépôt.

7. Utilisation selon l'une des revendications 1 à 6, **caractérisée en ce que** le dépôt (3) à base d'argent a une épaisseur comprise entre environ 3 et 12 micromètres.

8. Utilisation selon l'une des revendications 1 à 7, **caractérisée en ce que** le verre de substrat (1) est du verre sodo-calcique.

9. Utilisation selon l'une des revendications 1 à 8, **caractérisée en ce que** le substrat (1) de verre est destiné à la réalisation de panneau de visualisation.

## Patentansprüche

1. Verwendung einer Sperrschicht (2) auf Nitrid-Basis auf einem mit einer Aufbringung (3) auf Silber-Basis beschichteten Glassubstrat zwischen dem Glassubstrat und der Aufbringung auf Silber-Basis, um eine gelbe Färbung des Glases zu vermeiden, die nach der Wärmebehandlung des Silbersubstrats ohne eine Sperrschicht auftritt und durch die Silberdiffusion in dem Glas hervorgerufen wird.

2. Verwendung nach Anspruch 1, **dadurch gekennzeichnet, daß** das Nitrid unter Titannitrid, Siliziumnitrid, Bornitrid oder einer Mischung dieser Nitride ausgewählt ist.

3. Verwendung nach einem der Ansprüche 1 oder 2, **dadurch gekennzeichnet, daß** die Sperrschicht (2) durch Kathodenzerstäubung, Vakuumverdampfung oder PECVD aufgebracht ist.

4. Verwendung nach einem der Ansprüche 1 bis 3, **dadurch gekennzeichnet, daß** die Sperrschicht (2) eine Dicke größer als oder gleich ungefähr 50 Nanometer aufweist.

5. Verwendung nach einem der Ansprüche 1 bis 4, **dadurch gekennzeichnet, daß** die Aufbringung (3) auf Silberbasis durch Fotoätzen gebildet ist.

6. Verwendung nach einem der Ansprüche 1 bis 5, **dadurch gekennzeichnet, daß** das Silber nach der Aufbringung einer Wärmebehandlung bei einer Temperatur oberhalb von 400 °C unterworfen wird.

7. Verwendung nach einem der Ansprüche 1 bis 6, **dadurch gekennzeichnet, daß** die Aufbringung (3) auf Silber-Basis eine Dicke zwischen ungefähr 3 und 12 Mikrometer aufweist.

8. Verwendung nach einem der Ansprüche 1 bis 7, **dadurch gekennzeichnet, daß** das Glas des Substrats (1) ein Floatglas ist.

9. Verwendung nach einem der Ansprüche 1 bis 8, **dadurch gekennzeichnet, daß** das Glassubstrat (1) zur Bildung eines Wiedergabeschirms bestimmt ist.

## Claims

1. The use, on a glass substrate (1) coated with a silver-based deposit (3), of a nitride-based barrier (2) interposed between the glass substrate and the silver-based deposit to avoid a yellow coloring of the glass that appears after heat treatment of the silver-coated glass without barrier and is prompted by the diffusion of glass in the glass.

2. A use according to claim 1, wherein the nitride is chosen from among titanium nitride, silicon nitride, boron nitride or a mixture of these nitrides.

3. A use according to one of the claims 1 or 2, wherein the barrier (2) is deposited by cathode spraying, vapor deposition under vacuum or Plasma Enhanced Chemical vapor Deposition.

4. A use according to one of the claims 1 to 3, wherein the barrier (2) has a thickness greater than or equal to about 50 nanometers.

5. A use according to one of the claims 1 to 4, wherein the silver-based deposition (3) is done by photo etching.

6. A use according to one of the claims 1 to 5, wherein the silver has undergone heat treatment at a temperature of over 400°C after the deposition.

7. A use according to any of the claims 1 to 6, wherein the silver-based (3) deposit has a thickness ranging from about 3 micrometers to 12 micrometers.

8. A use according to any of the claims 1 to 7, wherein the substrate glass (1) is floating glass.

9. A use according to any of the claims 1 to 8, wherein the glass substrate (1) is designed for the making of glass panels.
